# FASCICULE DE BREVET EUROPEEN

(11) **EP 0 490 755 B1**
(45) Date de publication et mention de la délivrance du brevet: **22.02.1995**
(21) Numéro de dépôt: 91403340.2
(22) Date de dépôt: 10.12.1991
(51) Int. Cl.: B64C 27/14

(54) **Mécanisme de transmission de puissance entre un arbre moteur et deux ensembles à entraîner, utilisable notamment sur les giravions**
Antriebssystem zwischen einer Antriebswelle und zwei angetriebenen Einheiten, insbesondere für ein Drehflügelflugzeug
Power drive between a drive shaft and two driven units, in particular for rotor-powered aircraft

(30) Priorité: 12.12.1990 FR 9015571
(43) Date de publication de la demande: 17.06.1992
(73) Titulaire: AEROSPATIALE Société Nationale Industrielle, 75781 Paris Cédex 16 (FR)
(72) Inventeur: Marnot, Paul Henri, F-13250 Cornillon-Confoux (FR)
(74) Mandataire: Poulin, Gérard

(56) Documents cités:
- FR-A- 1 230 679
- FR-A- 1 422 328

## Description

L'invention concerne un mécanisme de transmission de puissance conçu pour être placé entre un arbre moteur et deux ensembles à entraîner de telle sorte que le premier de ces ensembles puisse, à la demande, être entraîné ou ne pas être entraîné, alors que le second ensemble est entraîné en permanence soit par l'arbre moteur, soit par le premier ensemble.

Un tel mécanisme peut notamment être utilisé pour assurer, sur un giravion tel qu'un hélicoptère, la transmission de la puissance fournie par au moins un moteur dudit hélicoptère, d'une part aux rotors qui doivent pouvoir soit être entraînés en rotation, soit au contraire et sur commande ne pas être entraînés alors que le moteur est en fonctionnement, et d'autre part, en permanence, à des accessoires de servitude de type pompe, alternateur etc., lesquels accessoires doivent pouvoir également être entraînés en rotation par les rotors, moteur arrêté.

Grâce à l'utilisation d'un tel mécanisme de transmission de puissance, il est possible d'utiliser le moteur unique ou l'un des moteurs servant à entraîner le ou les rotors du giravion pour entraîner les accessoires de servitude de ce dernier, ce qui conduit à une simplification et à un gain de poids important par rapport à la disposition classique dans laquelle l'entraînement des accessoires de servitude est réalisé par l'intermédiaire d'un moteur auxiliaire spécial ne servant pas à l'entraînement des rotors. Lorsque le giravion est en vol, le moteur entraîne simultanément le ou les rotors ainsi que les accessoires de servitude. En cas d'arrêt volontaire ou non du ou des moteurs en vol, le ou les rotors fonctionnant en régime d'autorotation peuvent alors continuer à entraîner les accessoires de servitude. Lorsque le giravion est au sol et en l'absence de toute source d'énergie extérieure, le mécanisme de transmission permet au moteur d'entraîner les accessoires de servitude procurant l'énergie électrique et l'énergie hydraulique nécessaires à certaines opérations de vérification, de dépannage et d'essai, sans que les rotors ne tournent.

Dans le document FR-A-1 422 328, il est décrit un mécanisme de transmission de puissance conçu pour remplir les fonctions précitées. Ce mécanisme comprend trois arbres coaxiaux, respectivement reliés à un arbre moteur et à chacun des deux ensembles à entraîner, et trois roues libres reliant les arbres deux à deux. De plus, un organe d'actionnement manoeuvrable depuis le poste de pilotage du giravion permet de faire passer la roue libre placée entre l'arbre moteur et l'arbre d'entraînement du ou des rotors d'un état où elle solidarise ces deux arbres en rotation à un état où ces deux arbres sont désolidarisés. Dans ce dernier état, le ou les rotors ne sont alors pas entraînés par le moteur alors que les accessoires de servitude sont au contraire entraînés par ce moteur.

Bien qu'il remplisse les fonctions désirées, le mécanisme décrit dans ce document FR-A-1 422 328 est lourd et surtout complexe. De plus, il comprend des dispositifs compliqués de verrouillage pour éviter d'endommager le mécanisme si les changements d'états ne sont pas effectués alors que les vitesses de rotation des différents arbres ne sont pas parfaitement synchronisées.

L'invention a précisément pour objet un mécanisme de transmission de puissance original conçu pour remplir les mêmes fonctions que le mécanisme décrit dans le document FR-A-1 422 328, mais dont la structure est particulièrement légère et simple et permet les changements d'états à tout moment, y compris avec les arbres d'entrée et de sortie en rotation.

Conformément à l'invention, ce résultat est obtenu au moyen d'un mécanisme de transmission de puissance entre un arbre moteur et deux ensembles à entraîner, ce mécanisme comprenant une roue libre interposée entre l'arbre moteur et un premier organe d'entraînement d'un premier desdits ensembles, la roue libre comprenant un organe menant et un organe mené, des moyens d'actionnement permettant de faire passer la roue libre d'un état de solidarisation en rotation à un état de désolidarisation en rotation entre son organe menant et son organe mené et des moyens de liaison mécanique entre l'arbre moteur et un premier organe d'entraînement du deuxième ensemble,
caractérisé par le fait que les moyens de liaison mécanique comprennent un arbre de liaison constamment en prise sur l'arbre moteur et sur le premier organe d'entraînement du deuxième ensemble, cet arbre de liaison portant un organe de commande de la roue libre et étant apte à coulisser selon son axe, en réponse auxdits moyens d'actionnement, entre une première position dans laquelle l'organe de commande place la roue libre dans son état de solidarisation en rotation entre son organe menant et son organe mené, et une deuxième position dans laquelle l'organe de commande place la roue libre dans son état de désolidarisation en rotation entre son organe menant et son organe mené.

Dans un mécanisme ainsi constitué, le passage de la roue libre placée entre l'arbre moteur et le premier organe d'entraînement du premier ensemble, d'une position d'entraînement à une position de non-entraînement, est commandé directement en réalisant une translation de l'arbre de liaison assurant la transmission entre l'arbre moteur et le deuxième ensemble qui doit être entraîné en permanence, sans qu'il soit nécessaire d'avoir recours à d'autres mécanismes complexes.

De plus, il est important de noter que la transmission des mouvements entre l'arbre moteur et l'ensemble qui doit être entraîné en permanence s'effectue constamment au travers de l'arbre de liaison, qui est toujours en prise à la fois avec l'arbre moteur et avec l'organe d'entraînement de ce dernier ensemble, quel que soit l'état occupé par la roue libre. Par conséquent, la commande du changement d'état de la roue libre peut se faire à tout moment sans risque d'endommager le mécanisme, c'est-à-dire aussi bien lorsque celui-ci est à l'arrêt que lorsque il est en fonctionnement.

Dans un mode de réalisation préféré de l'invention, la roue libre comprend des galets montés dans une cage interposée entre un organe menant entraîné par l'arbre moteur et un organe mené portant le premier organe d'entraînement du premier ensemble, l'organe de commande étant lié en rotation à ladite cage, de telle sorte qu'à un coulissement de l'arbre de liaison selon son axe entre la première position et la deuxième position corresponde une rotation de ladite cage entre deux positions correspondant respectivement audit état de solidarisation en rotation et audit état de désolidarisation en rotation de la roue libre.

Avantageusement, l'arbre de liaison et la roue libre sont alors disposés coaxialement, l'organe de commande comprenant au moins un doigt fixé sur l'arbre de liaison et coopérant avec une rampe inclinée formée sur un prolongement axial de la cage.

L'invention trouve notamment une application dans le cas où le premier ensemble à entraîner comprend au moins un rotor de giravion et où le second ensemble à entraîner comprend au moins un accessoire de ce giravion.

On décrira maintenant, à titre d'exemple non limitatif, un mode de réalisation préféré de l'invention, en se référant aux dessins annexés, dans lesquels :
- la figure 1 est une vue de dessus illustrant de façon schématique l'entraînement des rotors et des accessoires de servitude d'un hélicoptère équipé de deux turbomoteurs, cette transmission s'effectuant, à partir de l'un de ces turbomoteurs, au travers d'un mécanisme conforme à l'invention ;
- la figure 2 est une vue en coupe schématique représentant à plus grande échelle une partie du mécanisme de transmission de puissance utilisé dans l'ensemble illustré sur la figure 1 ;
- la figure 3 est une vue de côté illustrant à plus grande échelle la position relative entre un doigt solidaire de l'arbre de liaison et une rampe inclinée formée dans la cage de la roue libre lorsque cette dernière occupe son état de fonctionnement normal ;
- la figure 4 est une vue en coupe transversale de la roue libre dans cet état de fonctionnement normal ;
- la figure 5 est une vue de côté comparable à la figure 3 illustrant la position relative du doigt fixé sur l'arbre de liaison et de la rampe inclinée formée dans la cage de la roue libre lorsque cette dernière occupe son état de débrayage ; et
- la figure 6 est une vue en coupe transversale comparable à la figure 4 illustrant la roue libre dans cet état de débrayage.

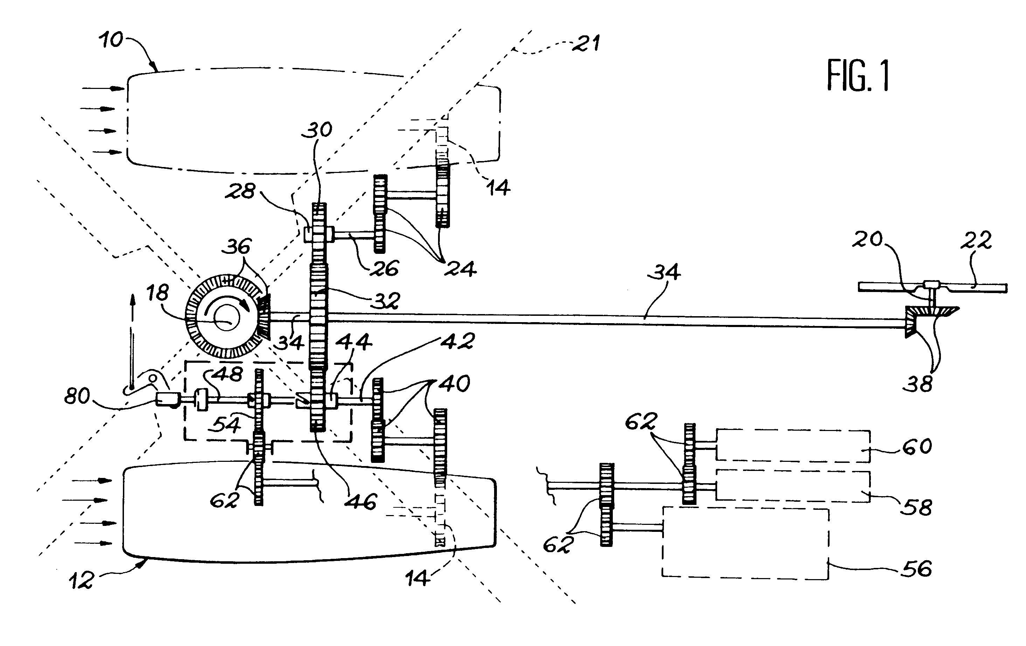

Sur la figure 1, les références 10 et 12 désignent deux turbomoteurs qui ont principalement pour fonction d'entaîner en rotation le rotor principal et le rotor de queue d'un hélicoptère. Pour remplir cette fonction, les arbres de sortie de ces turbomoteurs sont reliés aux arbres 18 et 20 respectivement du rotor principal 21 et du rotor de queue 22, au travers d'un mécanisme de transmission de puissance représenté de façon très schématique sur la figure 1 et qui peut prendre dans certains cas des formes différentes, sans sortir du cadre de l'invention.

Ce mécanisme comprend, à partir de l'arbre de sortie 14 du turbomoteur 10, un ou plusieurs trains d'engrenages 24 transmettant à un arbre parallèle 26 le mouvement de rotation de cet arbre de sortie. Une roue libre 28, montée sur l'arbre 26, entraîne un pignon mené 30 qui est en prise sur une roue dentée 32 fixée sur un arbre 34 parallèle à l'arbre 26 et aux arbres de sortie des turbomoteurs.

A l'une de ses extrémités, l'arbre 34 entraîne en rotation l'arbre 18 du rotor principal 21, par l'intermédiaire de pignons de renvoi d'angle 36. De même, des pignons de renvoi d'angle 38 placés à l'autre extrémité de l'arbre 34 permettent à ce dernier d'entraîner en rotation l'arbre 20 du rotor de queue 22.

L'arbre de sortie 14 du moteur 12 est relié mécaniquement à la roue dentée 32 par l'intermédiaire d'un ou plusieurs trains d'engrenages 40 placés entre cet arbre de sortie et un arbre moteur 42 parallèle aux arbres 16 et 34, et d'une roue libre 44 montée sur cet arbre moteur 42 et entraînant un pignon mené 46, en prise sur la roue dentée 32.

Grâce à l'agencement classique qui vient d'être décrit, les turbomoteurs 10 et 12 entraînent normalement en rotation, lorsqu'ils sont en fonctionnement, le rotor principal 21 et le rotor de queue 22. Les roues libres 28 et 44 permettent à ces rotors de tourner lors de l'arrêt d'un ou des turbomoteurs ou, d'une façon plus générale, si les organes liés aux rotors tournent plus vite que les organes liés aux moteurs.

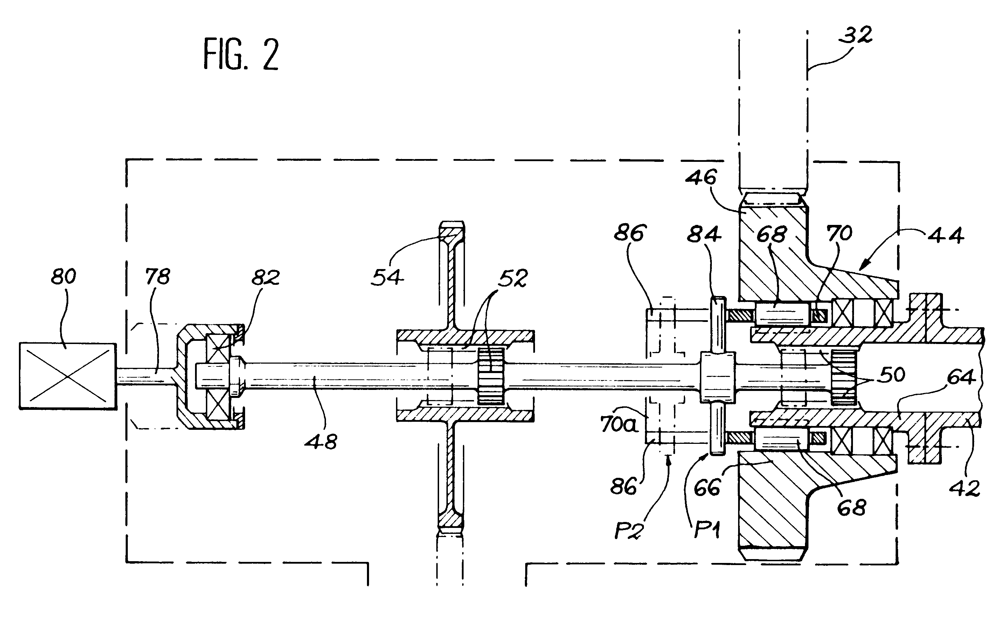

De plus, un arbre de liaison 48, disposé coaxialement à l'arbre moteur 42, est constamment en prise sur ce dernier, par l'intermédiaire d'un système de cannelures 50 illustré sur la figure 2. Cet arbre de liaison 48 est également constamment en prise, par l'intermédiaire d'un système de cannelures 52, avec un ou plusieurs engrenages 54 disposés coaxialement autour de l'arbre 48 et servant à entraîner différents accessoires de servitude tels qu'une pompe à huile 56, un alternateur 58 et une pompe hydraulique 60 (figure 1). Bien entendu, cette liste d'accessoires n'est donnée qu'à titre d'exemple, le nombre des accessoires entraînés par l'arbre de liaison 48 pouvant être selon le cas inférieur ou supérieur à celui qui est représenté sur la figure 1. Différents trains d'engrenages 62 transmettent à ces accessoires le mouvement de rotation de l'engrenage 54.

Comme on l'a représenté plus en détail sur la figure 2, la roue libre 44 servant à transmettre à la roue dentée 32 le mouvement de rotation de l'arbre moteur 42 comprend un organe tubulaire intérieur menant 64, fixé à l'extrémité de l'arbre moteur 42, un organe tubulaire extérieur mené 66 portant le pignon 46, et un ensemble de galets 68 interposé entre les organes 64 et 66 et dont le positionnement relatif est assuré par une cage tubulaire 70.

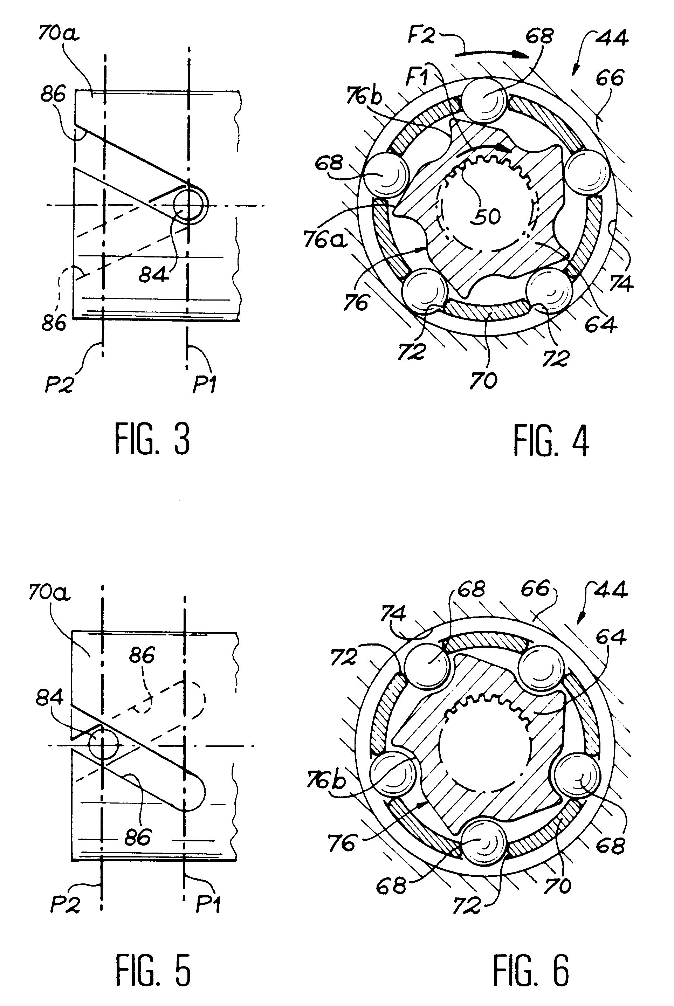

Comme l'illustrent plus précisément les figures 4 et 6, les galets cylindriques 68 sont placés dans des fenêtres 72 angulairement réparties sur toute la circonférence de la cage tubulaire 70. Chacun des galets 68 est simultanément en contact avec la surface intérieure cylindrique 74 de l'organe tubulaire extérieur mené 66 de la roue libre et avec la surface extérieure 76 de l'organe tubulaire intérieur menant 64 de la roue libre. En face de chacun des galets 68, cette surface extérieure 76 comporte une rampe 76a prolongée par une partie en creux 76b.

Comme l'illustre plus précisément la figure 4, les rampes 76a formées sur la surface extérieure 76 de la partie intérieure menante 64 de la roue libre sont dimensionnées de telle sorte que, lorsque les galets 68 se trouvent placés sur ces rampes 76a, une rotation de l'organe tubulaire intérieur menant 64 de la roue libre dans le sens des aiguilles d'une montre sur la figure 4 (flèche F1) provoque un coincement des galets 68 entre ces rampes 76a et la surface intérieure cylindrique 74 de l'organe tubulaire extérieur mené 66 de la roue libre. Par conséquent, cette rotation de l'organe tubulaire intérieur menant 64 dans le sens de la flèche F1 se traduit par une rotation dans le même sens et à la même vitesse (flèche F2) de l'organe tubulaire extérieur mené 66 de la roue libre.

Au contraire, lorsque les galets 68 sont situés en face des parties en creux 76b formés sur la surface extérieure 76 de l'organe tubulaire intérieur menant 64 de la roue libre, il existe entre les galets 68 et les surfaces 74 et 76 un jeu suffisant pour qu'une rotation quelconque de l'un ou l'autre des organes 64 et 66 ne soit pas transmise à l'autre organe.

En se référant à nouveau à la figure 2, on voit que l'arbre de liaison 48 se prolonge au-delà du pignon 54 servant à entraîner les accessoires de servitude, de façon à être solidarisé en translation d'une tige de commande 78 située dans le prolongement axial de l'arbre 48 et apte à être animée d'un mouvement de translation par un actionneur 80 commandé depuis le poste de pilotage du giravion. La liaison entre l'extrémité de l'arbre de liaison 48 et l'extrémité adjacente de la tige de commande 78 est assurée par un palier rotatif à billes 82 ou par tout moyen équivalent autorisant une rotation de l'arbre 48 par rapport à la tige 78, tout en assurant la solidarisation en translation de ces deux pièces.

Lorsque l'actionneur 80 n'est pas mis en oeuvre, l'ensemble constitué par la tige de commande 78 et par l'arbre de liaison 48 occupe une première position P1, illustrée en trait plein sur la figure 2, dans laquelle cet ensemble est déplacé au maximum vers la droite sur cette figure et qui détermine, comme on le verra par la suite, un état de solidarisation en rotation entre les organes menant et mené de la roue libre 44. Cette première position est obtenue automatiquement, par exemple, grâce à un moyen élastique tel qu'un ressort de compression (non représenté) placé à l'intérieur de l'actionneur 80.

Lorsque l'actionneur 80 est mis en oeuvre, l'ensemble constitué par la tige de commande 78 et par l'arbre de liaison 48 est déplacé au maximum vers la gauche en considérant la figure 2, dans une deuxième position P2 illustrée partiellement en traits discontinus sur cette figure. Cette deuxième position correspond à un état de désolidarisation en rotation entre les organes menant et mené de la roue libre 44.

Il est important de noter que le dimensionnement axial des cannelures 50 et 52 est suffisant pour que l'arbre de liaison 48 reste en permanence en prise à la fois avec l'organe tubulaire intérieur menant 64 de la roue libre 44 et avec l'engrenage 54 d'entraînement des accessoires de servitude, quelle que soit la position occupée par l'arbre de liaison 48.

Comme l'illustrent plus précisément les figures 2, 3 et 5, les mouvements de translation de l'arbre de liaison 48 entre ces positions P1 et P2 sont transmis à la cage 70 de la roue libre 44 par un pion ou une goupille 84 fixé radialement sur l'arbre 48 et dont les extrémités traversent deux fentes 86 formées en des emplacements diamétralement opposés sur un prolongement axial 70a de la cage 70 à l'extérieur de la roue libre 44.

De façon plus précise, les fentes 86 formées dans le prolongement 70a de la cage de la roue libre sont inclinées par rapport à l'axe de cette dernière, de façon à former des rampes qui ont pour effet de provoquer une rotation relative prédéterminée entre l'arbre de liaison 48 et la cage 70 lorsque l'arbre de liaison se déplace axialement entre les positions P1 et P2.

Ainsi, lorsque l'arbre de liaison 48 occupe sa première position P1, les extrémités du pion 84 sont situées dans le fond des fentes 86 comme l'illustre la figure 3. Dans la position angulaire relative ainsi définie entre la cage 70 et l'organe tubulaire intérieur menant 64 lié en rotation à l'arbre de liaison 48, les galets 68 se trouvent en face des rampes 76a formées sur la surface extérieure 76 de l'organe tubulaire intérieur menant 64 de la roue libre, comme l'illustre la figure 4. Cette position définit un état de désolidarisation en rotation entre les organes menant 64 et mené 66 de la roue libre.

Dans cet état de solidarisation en rotation, une rotation de l'arbre moteur 42 entraîné par le turbomoteur 12 est transmise intégralement aux rotors au travers de la roue libre 44, comme on l'a décrit précédemment en se référant à la figure 4.

Cet état de solidarisation en rotation des organes menant et mené de la roue libre 44 permet également, en cas d'arrêt du turbomoteur 12, la poursuite de la rotation des rotors, le coincement des galets 68 entre la surface intérieure cylindrique 74 et les rampes 76a cessant dès que l'organe tubulaire extérieur mené 66 tourne plus vite que l'organe tubulaire intérieur menant 64.

Comme l'illustre la figure 5, la mise en oeuvre de l'actionneur 80 a pour effet d'amener les extrémités du doigt 84 dans les parties des fentes 86 les plus éloignées de la roue libre 44. Ce déplacement du doigt 84 dans les fentes 86 provoque une rotation relative entre la cage 70 et l'organe tubulaire intérieur menant 64 de la roue libre 44 qui se traduit, comme l'illustre la figure 6, par la venue des galets 68 en face des parties en creux 76b de la surface extérieure 76 de l'organe tubulaire intérieur menant 64.

Dans ces conditions, les organes 64 et 66 de la roue libre 44 sont libres de tourner l'un par rapport à l'autre comme on l'a décrit précédemment en référence à la figure 6. Une mise en oeuvre de l'actionneur 80 permet donc de transmettre aux accessoires de servitude la puissance délivrée par le turbomoteur 12 sans que les rotors de l'hélicoptère ne soient en rotation. La fourniture d'énergie électrique, hydraulique ou autre peut ainsi être assurée au sol en l'absence de toute autre source d'énergie extérieure.

Il est à noter que le mécanisme de transmission de puissance conforme à l'invention, dont un mode de réalisation préféré vient d'être décrit, permet de remplir toutes les fonctions habituelles d'un tel mécanisme d'une manière particulièrement simple et fiable. De plus, ce mécanisme permet de passer d'un état de fonctionnement à un autre sans qu'il soit nécessaire d'arrêter les turbomoteurs, puisque l'arbre de liaison servant à entraîner les accessoires de servitude est constamment en prise à la fois avec l'arbre moteur et avec le ou les engrenages de commande des accessoires, de même qu'avec la cage de la roue libre.

Bien entendu, l'invention n'est pas limitée au mode de réalisation qui vient d'être décrit à titre d'exemple, mais en couvre toutes les variantes sans sortir du cadre des revendications qui suivent. Ainsi, dans le cas où la roue libre présente une structure différente de celle qui a été décrite, le passage de cette roue libre de son état de solidarisation à son état de désolidarisation peut être commandé par l'arbre de liaison d'une manière différente de celle qui a été décrite. Par ailleurs, on comprend que le mécanisme selon l'invention peut être utilisé sur un giravion équipé d'un ou plusieurs moteurs et, de façon plus générale, dans tous les cas où l'on souhaite pouvoir entraîner deux ensembles différents à partir d'un moteur unique, lorsque l'un de ces ensembles doit pouvoir être entraîné en permanence, alors que l'autre ensemble doit pouvoir être entraîné ou au contraire ne pas être entraîné.

## Revendications

1. Mécanisme de transmission de puissance entre un arbre moteur (42) et deux ensembles à entraîner (21, 22 ; 56, 58), ce mécanisme comprenant une roue libre (44) interposée entre l'arbre moteur et un premier organe (46) d'entraînement d'un premier (18, 22) desdits ensembles, la roue libre comprenant un organe menant (64) et un organe mené (66), des moyens d'actionnement (80) permettant de faire passer la roue libre d'un état de solidarisation en rotation à un état de désolidarisation en rotation entre son organe menant et son organe mené, et des moyens de liaison mécanique (48) entre l'arbre moteur et un premier organe (54) d'entraînement du deuxième ensemble,
caractérisé par le fait que les moyens de liaison mécanique comprennent un arbre de liaison (48) constamment en prise sur l'arbre moteur (42) et sur le premier organe (54) d'entraînement du deuxième ensemble, cet arbre de liaison portant un organe de commande (84) de la roue libre et étant apte à coulisser selon son axe, en réponse auxdits moyens d'actionnement (80), entre une première position dans laquelle l'organe de commande (84) place la roue libre dans son état de solidarisation en rotation entre son organe menant et son organe mené, et une deuxième position dans laquelle l'organe de commande place la roue libre dans son état de désolidarisation en rotation entre son organe menant et son organe mené.

2. Mécanisme selon la revendication 1, caractérisé par le fait que la roue libre (44) comprend des galets (68) montés dans une cage (70) interposée entre l'organe menant (64) entraîné par l'arbre moteur (42) et l'organe mené (66) portant ledit premier organe (46) d'entraînement du premier ensemble, l'organe de commande (84) étant lié en rotation à ladite cage (70), de telle sorte qu'à un coulissement de l'arbre de liaison (48) selon son axe entre la première position et la deuxième position corresponde une rotation de ladite cage (70) entre deux positions correspondant respectivement audit état de solidarisation en rotation et audit état de désolidarisation en rotation de la roue libre (44).

3. Mécanisme selon la revendication 2, caractérisé par le fait que l'arbre de liaison (48) et la roue libre (44) sont disposés coaxialement, l'organe de commande comprenant au moins un doigt (84) fixé sur l'arbre de liaison (48) et coopérant avec une rampe inclinée (86) formée sur un prolongement axial de la cage (70).

4. Mécanisme selon l'une quelconque des revendications précédentes, caractérisé par le fait que l'arbre de liaison (48) est constamment en prise sur l'arbre moteur (42) par l'intermédiaire d'un premier système de cannelures (50) et constamment en prise sur le premier organe (54) d'entraînement du deuxième ensemble par l'intermédiaire d'un deuxième système de cannelures (52).

5. Mécanisme selon l'une quelconque des revendications précédentes, caractérisé par le fait que les moyens d'actionnement comprennent un actionneur (80) dont une tige de commande (78) est placée dans le prolongement de l'arbre de liaison (48) et liée en translation à ce prolongement par un palier rotatif (82).

6. Mécanisme selon l'une quelconque des revendications précédentes, caractérisé par le fait que le premier ensemble à entraîner comprend au moins un rotor (21, 22) de giravion et que le second ensemble à entraîner comprend au moins un accessoire (56, 58, 60) de ce giravion.

## Claims

1. Mechanism for the transmission of power between a driving shaft (42) and two assemblies to be driven (21,22; 56, 58), said mechanism incorporating a free wheel (44) interposed between the driving shaft and a first driving means (46) for a first (18, 22) of the said assemblies, the free wheel comprising a driving member (64) and a driven member (66), actuating means (80) making it possible to pass the free wheel from a rotation engagement state to a rotation disengagement state between its driving member and its driven member and mechanical connection means (48) between the driving shaft and a first driving means (54) of the second assembly, characterized in that the mechanical connection means incorporate a connection shaft (48) constantly engaged on the driving shaft (42) and on the first driving means (54) of the second assembly, said connection shaft carrying a control member (84) for the free wheel and being able to slide along its axis in response to said actuating means (80) between a first position in which the control member (84) places the free wheel in its rotation engagement state between its driving member and its driven member, and a second position in which the control member places the free wheel in its rotation disengagement state between its driving member and its driven member.

2. Mechanism according to claim 1, characterized in that the free wheel (44) incorporates rollers (68) mounted in a cage (70) interposed between the driving member (64) driven by the driving shaft (42) and the driven member (66) carrying the first driving means (46) of the first assembly, the control member (84) being linked in rotation with said cage (70), so that with a sliding of the connection shaft (48) along its axis between the first and second positions corresponds a rotation of said cage (70) between two positions respectively corresponding to said rotation engagement state and said rotation disengagement state of the free wheel (44).

3. Mechanism according to claim 2, characterized in that the connection shaft (48) and the free wheel (44) are arranged coaxially, the control member incorporating at least one pin fixed to the connection shaft (48) and cooperating with an inclined ramp (86) formed on an axial extension of the cage (70).

4. Mechanism according to any one of the preceding claims, characterized in that the connection shaft (48) is constantly engaged on the driving shaft (42) via a first system of splines (50) and is constantly engaged on the first driving means (54) of the second assembly via a second system of splines (52).

5. Mechanism according to any one of the preceding claims, characterized in that the actuating means comprise an actuator (80), whose control rod (78) is placed in the extension of the connection shaft (48) and which is linked in translation with said extension by a rotary bearing (82).

6. Mechanism according to any one of the preceding claims, characterized in that the first assembly to be driven comprises at least one gyroplane rotor (21, 22) and the second assembly to be driven comprises at least one ancillary system (38, 58, 60) of said gyroplane.

## Patentansprüche

1. Antriebssystem zwischen einer Antriebswelle (42) und zwei angetriebenen Einheiten (21, 22; 56, 58), bestehend aus einem Freilauf (44), der zwischen der Antriebswelle und einem ersten Antriebsorgan einer ersten (18, 22) der genannten Einheiten angeordnet ist, wobei der Freilauf ein treibendes Organ (64) und ein getriebenes Organ (66) aufweist, aus Steuermitteln (80), durch die der Freilauf aus einem Zustand der drehfesten Verbindung zwischen seinem treibenden Organ und seinem getriebenen Organ in einen Zustand, in dem diese drehmäßig voneinander gelöst sind, geschaltet werden kann, sowie aus mechanischen Verbindungsmitteln (48) zwischen der Antriebswelle und einem ersten Antriebsorgan (54) der zweiten Einheit, **dadurch gekennzeichnet, daß** die mechanischen Verbindungsmittel aus einer Verbindungswelle (48) bestehen, die konstant mit der Antriebswelle (42) und mit dem ersten Antriebsorgan (54) der zweiten Einheit in Eingriff steht, wobei diese Verbindungswelle ein Betätigungsorgan (84) für den Freilauf trägt und in Reaktion auf die genannten Steuermittel (80) längs ihrer Achse zwischen einer ersten Stellung, bei der das Betätigungsorgan (84) den Freilauf in seinen Zustand der drehfesten Verbindung zwischen seinem treibenden Organ und seinem getriebenen Organ versetzt, und einer zweiten Stellung, bei der das Betätigungsorgan den Freilauf in seinen Zustand versetzt, in dem sein treibendes Organ und seinem getriebenes Organ drehmäßig voneinander gelöst sind, verschiebbar ist.

2. Antriebssystem nach Anspruch 1, **dadurch gekennzeichnet, daß** der Freilauf (44) Rollen (68) aufweist, die in einen Käfig (70) eingesetzt sind, welcher zwischen dem von der Antriebswelle (42) angetriebenen treibenden Organ (64) und dem getriebenen Organ (66) angeordnet ist, das das genannte erste Antriebsorgan (46) der ersten Einheit trägt, wobei das Betätigungsorgan (84) mit dem genannten Käfig (70) drehfest verbunden ist, so daß dem Verschieben der Verbindungswelle (48) längs ihrer Achse zwischen ihrer ersten Stellung und der zweiten Stellung eine Drehbewegung des genannten Käfigs (70) zwischen zwei Stellungen entspricht, die dem genannten Zustand der drehfesten Verbindung bzw. dem genannten Zustand des drehmäßig voneinander Gelöstseins des Freilaufs (44) entsprechen.

3. Antriebssystem nach Anspruch 2, **dadurch gekennzeichnet, daß** die Verbindungswelle (48) und der Freilauf (44) koaxial angeordnet sind, wobei das Betätigungsorgan mindestens aus einem Finger (84) besteht, der an der Verbindungswelle (48) befestigt ist und mit einer geneigten Rampe (86) zusammenwirkt, die auf einer Verlängerung des Käfigs (70) in Achsrichtung gebildet ist.

4. Antriebssystem nach einem der vorherigen Ansprüche, **dadurch gekennzeichnet, daß** die Verbindungswelle (48) über ein erstes Rillensystem (50) konstant mit der Antriebswelle (42) und über ein zweites Rillensystem (52) konstant mit dem ersten Antriebsorgan (54) der zweiten Einheit in Eingriff steht.

5. Antriebssystem nach einem der vorherigen Ansprüche, **dadurch gekennzeichnet, daß** die Steuermittel ein Betätigungselement (80) aufweisen, dessen Betätigungsstab (78) in der Verlängerung der Verbindungswelle (48) angeordnet ist und über ein Drehlager (82) vorschubfest mit dieser Verlängerung verbunden ist.

6. Antriebssystem nach einem der vorherigen Ansprüche, **dadurch gekennzeichnet, daß** die erste angetriebene Einheit mindestens einen Drehflügelflugzeug-Rotor (21, 22) aufweist und daß die zweite angetriebene Einheit mindestens ein Hilfsgerät (38, 58, 60) für dieses Drehflügelflugzeug aufweist.
